# EUROPEAN PATENT SPECIFICATION

(11) **EP 3 100 013 B1**
(45) Date of publication and mention of the grant of the patent: **02.09.2020**
(21) Application number: 14880518.7
(22) Date of filing: 30.12.2014
(51) Int. Cl.: G01K 7/18, G01K 7/16, G01K 7/00

(54) **AN APPARATUS AND ASSOCIATED METHODS FOR TEMPERATURE SENSING**
VORRICHTUNG UND ZUGEHÖRIGE VERFAHREN ZUR TEMPERATURMESSUNG
APPAREIL ET PROCÉDÉS ASSOCIÉS POUR LA DÉTECTION DE TEMPÉRATURE

(30) Priority: 30.01.2014 GB 201401611
(43) Date of publication of application: 07.12.2016
(73) Proprietor: Nokia Technologies Oy, 02610 Espoo (FI)
(72) Inventor: WHITE, Richard, Huntingdon PE28 9DY (GB); HARRIS, Nadine, Cambridge CB4 1YE (GB); KIVIOJA, Jani, Cambridge CB4 2ZA (GB)
(74) Representative: Nokia EPO representatives
(86) International application number: PCT/FI2014/051059
(87) International publication number: WO 2015/114201

(56) References cited:
- EP-A2- 0 446 667
- US-A- 3 781 749
- US-A- 6 082 609
- US-A1- 2010 319 436
- US-A1- 2011 210 415
- US-A1- 2013 195 140
- ANONYMOUS: 'Four-terminal sensing.' WIKIPEDIA, THE FREE ENCYCLOPEDIA, [Online] 15 November 2013, pages 1 - 3, XP055216236 Retrieved from the Internet: <URL:http://en.wikipedia.org/wiki/Four-term inal_sensing> [retrieved on 2015-03-26]

## Description

### Technical Field

The present disclosure relates to the field of temperature sensing, associated methods and apparatus, and in particular concerns an ambient temperature sensor for use in electronic applications. Certain disclosed example aspects/embodiments relate to portable electronic devices, in particular, so-called hand-portable electronic devices which may be hand-held in use (although they may be placed in a cradle in use). Such hand-portable electronic devices include so-called Personal Digital Assistants (PDAs) and tablet PCs.

The portable electronic devices/apparatus according to one or more disclosed example aspects/embodiments may provide one or more audio/text/video communication functions (e.g. tele-communication, video-communication, and/or text transmission, Short Message Service (SMS)/Multimedia Message Service (MMS)/emailing functions, interactive/non-interactive viewing functions (e.g. web-browsing, navigation, TV/program viewing functions), music recording/playing functions (e.g. MP3 or other format and/or (FM/AM) radio broadcast recording/playing), downloading/sending of data functions, image capture function (e.g. using a (e.g. in-built) digital camera), and gaming functions.

### Background

Certain electronic devices can be used as temperature sensors. Typically, sensors suitable for sensing ambient temperature employ multi-layer or multi-component arrangements. US 2010/319436 discloses a test sensor that includes a body, a first conductive trace, a second conductive trace, and a third conductive trace. The body includes a first region that has a fluid-receiving area, a second region separate from the first region, and a first temperature sensing interface disposed at or adjacent to the fluid-receiving area. The fluid-receiving area receives a sample. The first trace is disposed on the body, and at least a portion of the first trace is disposed in the first region. The second and third traces are disposed on the body. The third trace extends from the first to the second regions. The third trace is connected to the first trace at the first temperature sensing interface. The third trace includes a different material than the first trace. A first thermocouple is formed at the first temperature sensing interface. The thermocouple provides temperature data to determine an analyte concentration.

Measuring the ambient temperature using a sensor mounted on an electronic device, a person, or other source of heat, can be problematic. The heat source to which the sensor is mounted will usually be at a different temperature to the surrounding ambient environment. Therefore the ambient temperature as determined by the temperature sensor will be influenced by the higher temperature of the heat source to which the sensor is mounted, giving inaccuracies in the determined ambient temperature.

The listing or discussion of a prior-published document or any background in this specification should not necessarily be taken as an acknowledgement that the document or background is part of the state of the art or is common general knowledge. One or more aspects/embodiments of the present disclosure may or may not address one or more of the background issues.

### Summary

According to a first aspect, there is provided an apparatus comprising:
a substrate;
a sensing material located on the substrate;
a first pair of contacts coupled to the sensing material and separated by a first distance; and
a second pair of contacts coupled to the sensing material and separated by a second distance, the second distance being greater than the first distance;
wherein the apparatus is configured to provide a first electrical property measurement between the first pair of contacts and to provide a second electrical property measurement between the second pair of contacts, the first and second electrical property measurements for use in determining an ambient temperature and/or a substrate temperature; characterized in that the sensing material is a single piece of a particular material.

The first and second pairs of contacts may be located on a common side of the sensing material.

The sensing material may be in contact with the substrate and the atmosphere.

The first and second pairs of contacts may be located on the side of the sensing material located adjacent to the substrate.

The sensing material may have a first side adjacent to the substrate and a second side opposite the first side. The first and second pairs of contacts may be configured and arranged such that, when the apparatus is in use, an average current path through the sensing material between the first pair of contacts is located closer to one of the first and second sides in comparison to an average current path through the sensing material between the second pair of contacts, which is located closer to the other of the first and second sides.

The first pair of contacts may define a current path of average current density through the sensing material substantially adjacent to the substrate. The second pair of contacts may define a current path of average current density through the sensing material substantially through the bulk of the sensing material further from the substrate and closer to an atmosphere side of the sensing material.

The sensing material may comprise one or more of: a carbon foam; an aluminium foam, and a graphene foam.

The ratio of the separation of the first pair of contacts to the second pair of contacts may be or may be greater than: 1:2; 1:4; 1:6; 1:8; 1:10; 1:11; 1:12; 1:13; 1:14; 1:15, 1:20, 1:30, 1:40 or 1:50. Of course in other examples other separation ratios may be used.

The first pair of contacts and the second pair of contacts may share a common contact. The first and second electrical property measurements may be measurements of: resistance, resistivity, current, current density, or voltage.

The apparatus may further comprise a controller coupled to the first and second pairs of contacts. The controller may be configured to obtain the first and second electrical property measurements. The controller may be configured to use the first and second electrical property measurements to determine the ambient temperature.

The controller may be configured to compare the obtained first and second electrical property measurements with predetermined calibration data for determination of the ambient temperature and/or substrate temperature.

The controller may be configured to apply a voltage across the first pair of contacts and/or the second pair of contacts to respectively determine the first electrical property measurement and/or the second electrical property measurement.

The controller may be configured to compare the first and second electrical property measurements to determine the ambient temperature.

The controller may be configured to compare the first and second electrical property measurements to determine the substrate temperature.

In an example not forming part of the invention, the apparatus may comprise: at least one processor; and at least one memory including computer program code, the at least one memory and the computer program code configured to, with the at least one processor, cause the apparatus to perform at least the following: for a sensing apparatus comprising a substrate, a sensing material mounted on the substrate; a first pair of contacts coupled to the sensing material and separated by a first distance; and a second pair of contacts coupled to the sensing material and separated by a second distance, the second distance being greater than the first distance; obtain a first electrical property measurement from the first pair of contacts; obtain a second electrical property measurement from the second pair of contacts; and
use the first and second electrical property measurements to determine an ambient temperature and/or a substrate temperature, characterized in that the sensing material is a single piece of a particular material.

The apparatus may comprise a controller to perform the obtaining and/or using steps. The apparatus may be one or more of: a portable electronic device, a mobile phone, a smartphone, a tablet computer, a laptop computer, a smartwatch, smart eyewear, a personal digital assistant, a digital camera, a non-portable electronic device, a desktop computer, a monitor, a household appliance, a smart TV, a server, or a module/circuitry for one or more of the same.

According to a further aspect, there is provided a method comprising:
for a sensing apparatus comprising a substrate, a sensing material mounted on the substrate; a first pair of contacts coupled to the sensing material and separated by a first distance; and a second pair of contacts coupled to the sensing material and separated by a second distance, the second distance being greater than the first distance;
obtaining a first electrical property measurement from the first pair of contacts;
obtaining a second electrical property measurement from the second pair of contacts; and
using the first and second electrical property measurements to determine an ambient temperature and/or a substrate temperature, characterized in that the sensing material is a single piece of a particular material.

Examples disclosed herein that do not fall within the scope of the claims are presented to facilitate understanding of the invention as defined by the claims.

The method may further comprise comparing the obtained first and second electrical property measurements with predetermined calibration data for determination of the ambient temperature and/or substrate temperature.

The method may further comprise applying a voltage across the first pair of contacts and/or the second pair of contacts to respectively determine the first electrical property measurement and/or the second electrical property measurement.

The method may further comprise comparing the first and second electrical property measurements to determine the ambient temperature.

The method may further comprise comparing the first and second electrical property measurements to determine the substrate temperature.

The method may further comprise measuring resistance, resistivity, current, current density, or voltage as the first and second electrical properties.

According to a further example not forming part of the invention, there is provided a method of forming an apparatus for use in determining an ambient temperature and/or a substrate temperature from a first electrical property measurement and a second electrical property measurement, the method comprising:
locating a sensing material located on a substrate;
coupling a first pair of contacts separated by a first distance to the sensing material and configured to provide the first electrical property measurement therebetween; and
coupling a second pair of contacts separated by a second distance to the sensing material configured to provide the second electrical property measurement therebetween, the second distance being greater than the first distance;
characterized in that the sensing material is a single piece of a particular material.

The method may further comprise locating the first and second pairs of contacts on a common side of the sensing material.

The method, which does not form part of the invention, may further comprise arranging the sensing material to be in contact with the substrate and the atmosphere.

The method may further comprise locating the first and second pairs of contacts on the side of the sensing material located adjacent to the substrate.

The method, which does not form part of the invention, may further comprise arranging the sensing material to have a first side adjacent to the substrate and a second side opposite the first side. The method may further comprise arranging the first and second pairs of contacts such that an average current path through the sensing material between the first pair of contacts is located closer to one of the first and second sides in comparison to an average current path through the sensing material between the second pair of contacts, which is located closer to the other of the first and second sides.

The method, which does not form part of the invention, may further comprise arranging the first pair of contacts to define a current path of average current density through the sensing material substantially adjacent to the substrate. The method may further comprise arranging the second pair of contacts to define a current path of average current density through the sensing material substantially through the bulk of the sensing material further from the substrate and closer to an atmosphere side of the sensing material.

The method may further comprise using one or more of a carbon foam, an aluminium foam, and a graphene foam as the sensing material.

The method may further comprise arranging the separation of the first pair of contacts to the second pair of contacts in a ratio of: 1:2; 1:4; 1:6; 1:8; 1:10; 1:11; 1:12; 1:13; 1:14; 1:15, 1:20, 1:30, 1:40 or 1:50 or greater than 1:50.

The method, which does not form part of the invention, may further comprise arranging the first pair of contacts and the second pair of contacts such that each pair shares a common contact. The steps of any method disclosed herein do not have to be performed in the exact order disclosed, unless explicitly stated or understood by the skilled person.

According to a further example not forming part of the invention, there may be provided a computer readable medium comprising computer program code stored thereon, the computer readable medium and computer program code being configured to, when run on at least one processor, perform at least the following: for a sensing apparatus comprising a substrate, a sensing material mounted on the substrate; a first pair of contacts coupled to the sensing material and separated by a first distance; and a second pair of contacts coupled to the sensing material and separated by a second distance, the second distance being greater than the first distance;
obtain a first electrical property measurement from the first pair of contacts;
obtain a second electrical property measurement from the second pair of contacts; and
use the first and second electrical property measurements to determine an ambient temperature and/or a substrate temperature.

According to a further example not forming part of the invention, there is provided an apparatus comprising, for a sensing apparatus comprising a substrate, a sensing material mounted on the substrate; a first pair of contacts coupled to the sensing material and separated by a first distance, and a second pair of contacts coupled to the sensing material and separated by a second distance, the second distance being greater than the first distance:
means for obtaining a first electrical property measurement from the first pair of contacts;
means for obtaining a second electrical property measurement from the second pair of contacts; and
means for using the first and second electrical property measurements to determine an ambient temperature and/or a substrate temperature.

The present disclosure includes one or more corresponding aspects, example embodiments or features in isolation or in various combinations whether or not specifically stated (including claimed) in that combination or in isolation. Corresponding means for performing one or more of the discussed functions are also within the present disclosure, for example an electrical property obtainer (e.g. a voltmeter or ammeter), an electrical property user (e.g., a computer configured to use the electrical properties to determine a temperature), or an electrical property comparer (e.g., to compare the values with each other and/or with calibration data to obtain a measure of temperature).

### Brief Description of the Figures

A description is now given, by way of example only, with reference to the accompanying drawings, in which:-
Figures 1a-1c show example schematic apparatus according to the present disclosure;
Figures 2a-2b show example models of temperature distribution within an apparatus according to the present disclosure;
Figures 3a-3b show example models of current density within an apparatus according to the present disclosure;
Figure 4 shows an example calibration plot according to the present disclosure;
Figures 5a-5b show an example model of current density within an apparatus at different substrate temperatures according to the present disclosure;
Figure 6 shows an example of an apparatus comprising a controller according to the present disclosure;
Figure 7 shows an example method according to the present disclosure; and
Figure 8 shows a computer-readable medium comprising a computer program configured to perform a method or methods according to the present disclosure.

### Description of Specific Aspects/Embodiments

This disclosure is generally directed to temperature sensing. Certain electronic devices can be used as temperature sensors. For example, a mobile communication/computing device may comprise an ambient temperature sensor.

Measuring the ambient temperature using a sensor mounted on an electronic device, a person, or other source of heat, can be problematic. The heat source to which the sensor is mounted will usually be at a different temperature to the surrounding ambient environment. For example, a temperature sensor mounted in a mobile computing device may be mounted on a substrate alongside other heat-generating components. Therefore the ambient temperature as determined by the temperature sensor will be influenced by the higher temperature of the heat source to which the sensor is mounted, giving inaccuracies in the determined ambient temperature.

Disclosed herein is an apparatus comprising a substrate and a sensing material located on the substrate. A first pair of contacts is separated by a first distance and a second pair of contacts is separated by a second distance. The second distance is greater than the first distance. The apparatus is configured to provide a first electrical property measurement between the first pair of contacts and to provide a second electrical property measurement between the second pair of contacts, the first and second electrical property measurements for use in determining an ambient temperature and/or a substrate temperature. The term "contact(s)" is used throughout, but other suitable terms which may be used include "electrode(s)" and "electrical contact(s)".

The first and second pairs of contacts are configured and arranged to provide an electrical property measurement, which may be indicative of resistance, from which the ambient and/or substrate temperature can be determined. The arrangement of the electrical contacts allows the substrate temperature to be decoupled from the ambient temperature as the resulting current paths between the contact pairs, through the sensing material, are influenced by the substrate temperature and ambient temperature by different amounts.

Each contact pair may be configured to have a voltage applied across it such that a measured electrical property (such as resistance or current density for example) of the sensing material can be obtained and used to determine a temperature. The apparatus may use an association between a temperature gradient across the sensing material (for example, due to a temperature difference between two opposing faces of the sensing material) and the values of one or more electrical properties of the sensing material. How the electrical property between the first pair and second pair of contacts varies with different substrate and ambient temperatures may be predetermined. One or more electrical properties may be recorded in a calibration process for a series of ambient and/or substrate temperatures. Such calibration data may be used, by comparison to an electrical property measurement, to determine an unknown ambient and/or substrate temperature.

Thus, the resistance of the sensing material may vary with temperature and the temperature of the sensing material is influenced more by the substrate on the first side and more by the atmosphere on the second side. Therefore, the substrate temperature and the ambient temperature will influence the current flow over the current paths between the contact pairs by different amounts.

The first pair of contacts may be located in close proximity to each other relative to the second pair of contacts, such that a current flow between them is concentrated at the surface of the sensing material where the contacts are located. If the contacts are located at the sensing material/substrate boundary, then the measured current may represent a current flow close to the sensing material/substrate boundary. The second pair of contacts may be positioned having a large separation from each other with respect to the first pair of contacts, such that a current flow between them is substantially greater through the bulk of the sensing material away from the surface of the sensing material where the contacts are located. The combination of measuring a current flow (or other electrical property) having a significant component relating to current flow at the sensing material/substrate interface, and a current flow (or other electrical property) relating to current flow substantially through the bulk of the sensing material (i.e. further from the sensing material/substrate boundary), may allow the ambient temperature to be determined with the effect of the substrate temperature substantially removed (and vice versa in some examples where the substrate temperature may be determined).

Examples disclosed herein may be considered to allow for improved temperature sensing, by allowing for the influence of a heat-generating body close to the temperature sensor to be accounted for while the manufacture of the temperature sensor can be relatively easy.

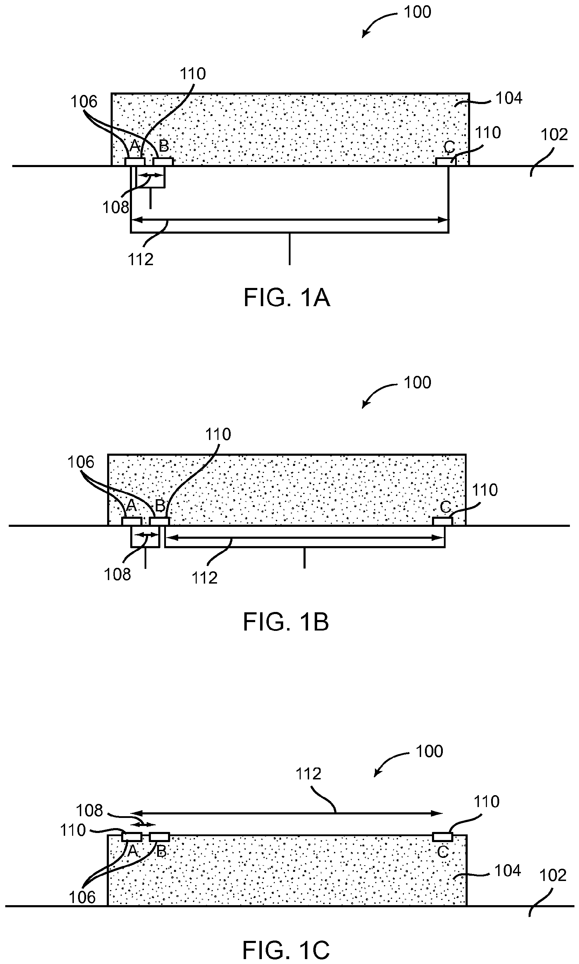

Figures 1a-1c illustrate apparatus 100 which may be used as ambient temperature sensors. The apparatus 100 shown in figures 1a-1c each comprise a substrate 102 and a sensing material 104 located on the substrate 102. A first pair of contacts 106 is coupled to the sensing material 104. The contacts in the first pair 106 are separated by a first distance 108. A second pair of contacts 110 is also coupled to the sensing material 104. The contacts in the second pair 110 are separated by a second distance 112. The second distance 112 is greater than the first distance 108.

The apparatus 100 are each configured to provide a first electrical property measurement between the first pair of contacts 106 and to provide a second electrical property measurement between the second pair of contacts 110. The first and second electrical property measurements can be used in determining an ambient temperature of the atmosphere around the sensing material 104. The first and second electrical property measurements can also be used in determining a substrate 102 temperature.

The electrical property measured may be, for example, resistance, resistivity, current, current density, or voltage. The electrical property measurements made using the first and second pairs of contacts will be dependent on the temperature of the material (due to temperature-dependent variations in the electrical properties in the sensing material). For example, resistivity distribution in the sensing material will depend on the temperature distribution within the sensing material and on the temperature coefficient of resistivity in the material. Therefore determined resistivity values can advantageously be used to determine temperatures. In other examples another electrical property measurement may be recorded which may be used to determine temperature. In some examples a particular electrical property may be determined from another related measured electrical property using a mathematical relationship. For example, current density may be obtained from a resistance measurement using Ohm's law.

For example, if a resistance R is measured, the resistivity (and therefore resistance measurement) of the sensing material varies dependent on the temperature *Tₛ* of the sensing material, the temperature *Tₐ* of the atmosphere (ambient temperature) and the thickness *d* of the sensing material (i.e., *R* = *f(Tₛ, Tₐ, d)*). The resistance R₂ between the second pair of more spaced apart contacts may dependent more strongly on *Tₐ* and d than the resistance R₁ between the first pair of more closely spaced contacts. The temperature of the sensing material is influenced on one side by the temperature of the substrate, and on another side by the temperature of the atmosphere. The sensing material will be at the substrate temperature at the substrate side, the atmospheric temperature at the other side, and at temperatures in-between in the bulk. By determining temperature dependent electrical measurements using the first and second contact pairs, the effect of the substrate temperature may be decoupled from the temperature of the sensing material (and thus the atmosphere).

Advantageously, by using an apparatus which may be manufactured in a simple way (for example, in two-step deposition of a sensing layer and a contact layer) improved temperature sensing may be achieved without complex manufacturing. The speed and cost of producing such an apparatus may be considerably lower than other approaches used which may rely, for example, on a multi-stage deposition process (more than two steps) or on more complex component arrangements. Optimisation of the sensing material can be performed to provide for temperature sensing in different environments (for example, for use in different devices or within different temperature ranges).

In figures 1a-1c the first and second pairs of contacts 106, 110 are located on a common side of the sensing material 104. In figures 1a and 1b the first and second pairs of contacts 106, 110 are located on the side of the sensing material 104 located adjacent to the substrate 102 (i.e. at the sensing material 104/substrate 102 interface). In figure 1c the first and second pairs of contacts 106, 110 are located on the side of the sensing material 104 located adjacent to the atmosphere opposite the substrate 102.

Locating the pairs of contacts on a common side of the sending material may advantageously allow for a simple fabrication method, for example in which the contacts are all printed/deposited in a process on one side of the sensing material. Such a method may provide a very simple, reliable, and cost effective way of manufacturing a temperature sensing apparatus.

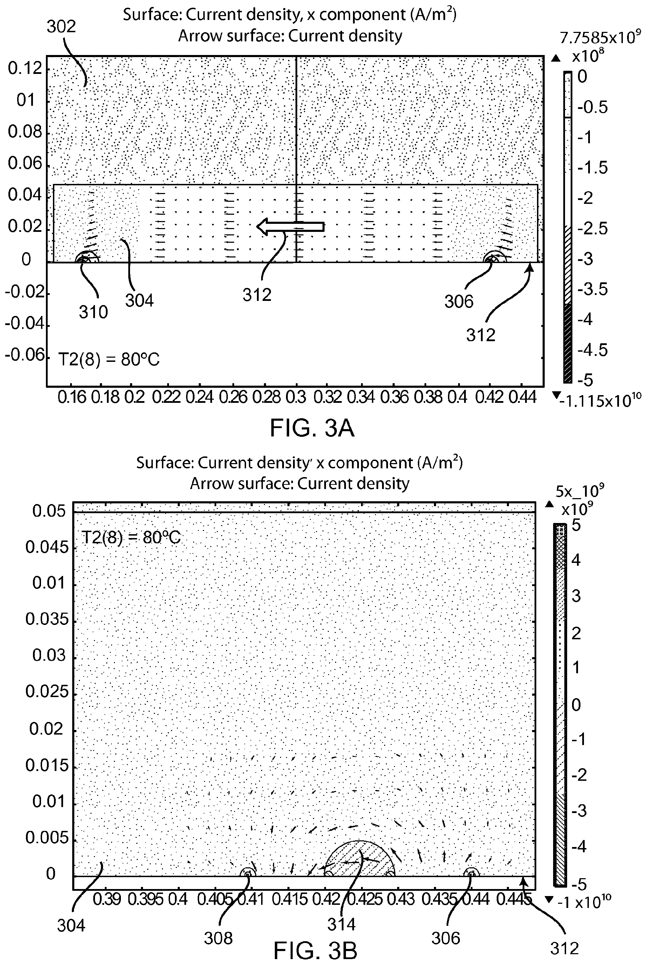

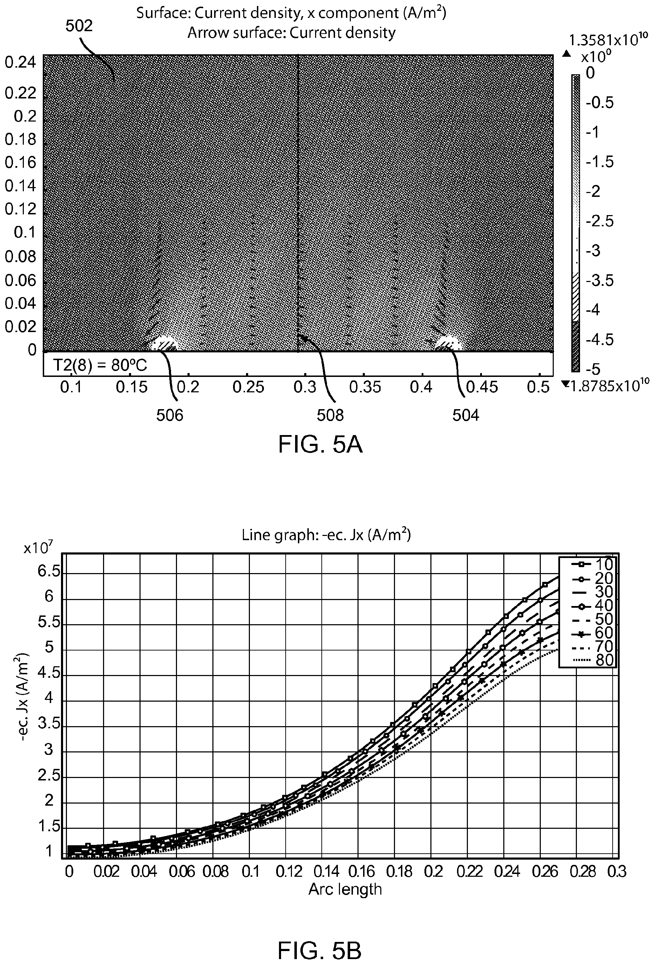

In these examples, the first pair of contacts 106 define an average current path through the sensing material 104 substantially adjacent to the substrate 102. This is due to their relatively close proximity to each other compared with the locations of the contacts in the second pair. Also, the second pair of contacts 110 in these examples define an average current path through the sensing material 104 more substantially through the bulk of the sensing material 104. This is due to their relatively large spacing from each other compared with the locations of the contacts in the first pair. Current paths through the sensing material 104 are discussed further in relation to figures 3a-3b and 5a-5b.

In figures 1a-1c the first pair of contacts 106 and the second pair of contacts 110 share a common contact. Sharing a common contact may be advantageous in reducing the total number of contacts required to obtain the two (i.e., first and second) electrical property measurements to just three contacts.

In figure 1a the first pair of contacts 106 comprises contact A and contact B located close to contact A. Contact A is located towards one side of the sensing material. The second pair of contacts 110 comprises contact A and contact C. Contact C is located towards an opposite side of the sensing material 104 to contact A. In this arrangement the large separation of the second pair of contacts 110 is achieved by positioning the contacts A and C at opposite sides of the sensing material 104. Increasing the separation of the contacts (A and C) may provide an advantage because the average current path formed between the contacts will be increasingly through the bulk of the sensing material as the separation of the contacts increases.

In figure 1b the first pair of contacts 106 comprises contact A and contact B located close to contact A. Contact A is located towards one side of the sensing material. The second pair of contacts 110 comprises contact B and contact C. Contact C is located towards an opposite side of the sensing material 104 to contacts A and B.

In figure 1c the contact pairs 106, 110 are located on the side of the sensing material 104 furthest from the substrate 102 on the atmosphere side of the apparatus 100. This arrangement may also provide for temperature sensing of the atmosphere (ambient temperature). The first, more closely spaced, contact pair 106 is configured to determine a temperature which is substantially dependent on the sensing material/atmosphere temperature due to the average current path between the two contacts in the first pair 106 localised at the sensing material/atmosphere interface. The second, more widely spaced, contact pair 110 is configured to determine a temperature which includes a greater influence by the substrate temperature due to the average current path between the two contacts in the second pair 110 being distributed more uniformly through the bulk of the sensing material and therefore closer to the substrate than the average current path between the first pair of contacts 106.

The sensing material 104 used in such apparatus 100 may comprise one or more of a carbon foam; an aluminium foam, and a graphene foam. The sensing material may not necessarily be a foam, and may be, for example, a composite material which combines properties of a low thermal conductivity and a high temperature coefficient of resistance. Such materials may be suitable for use as temperature sensing materials, and their particular properties may be engineered for improved accuracy of temperature sensing. The properties of the material used may be tailored for the intended use of the apparatus (for example, depending on the temperature range in which it will likely be used, or with a particular stability depending on the likely time of operation of the apparatus). In general, the sensing material may be configured to have a large surface area to volume ratio, such that it is sensitive to changes in ambient temperature. Thus, the material is preferably an electrically conductive foam.

In other examples the first pair of contacts and second pair of contacts may not necessarily share a common contact. This may advantageously allow for more flexibility in contact placement and contact connections, although an additional contact is required to be deposited compared with a two-contact-pair arrangement in which a common contact is shared between the pairs. In other examples each pair of contacts need not necessarily be on the same surface of the sensing material. For example, one pair may be located on one side while another pair may be located on an opposing side of the sensing material. As another example, one pair may be located on one side of the sensing material with a third electrode located within the sensing material and connected with a common electrode of the first pair using a via or similar connection. As another example, a first contact pair may be located on a surface while a second separate contact pair may be located in the bulk of the sensing material.

Materials which have a high temperature coefficient of resistance of the sensing material while having a low thermal conductivity are particularly suitable for use as sensing materials. A composite material that has components to fulfil these requirements may provide a good sensing material for providing accurate temperature sensing. A carbon foam may be used as a suitable sensing material, because of its acceptably high temperature coefficient of resistance and low thermal conductivity properties and it does not require complex engineering to fabricate. Table 1 below provides some example thermal parameters of materials suitable for use as sensing materials.

**Table 1 - Thermal properties of materials suitable for use as sensing materials**

| *Material* | *Temperature Coefficient of Resistance (x 10⁻³ K⁻¹)* | *Thermal conductivity (W*/*(mK))* |
|---|---|---|
| Carbon foam | 0.5 | 0.03 - 0.05 |
| Aluminium foam | 3.8 | 5.8 |
| Graphene foams | 0.5-1.2 | 0.26 - 2.12 |

As an example of how an apparatus as illustrated in figures 1a-1b may be used, first the resistance (as an electrical property of the sensing material) is measured between the first pair of contacts 106 and the second pair of contacts 110. The current flow between the first pair of contacts is concentrated close to the interface between the sensing material and the substrate as a result of the close proximity between the two contacts in the first pair 106. Therefore this resistance (R₁i) is strongly dependent on the substrate temperature (Tₛ). Also, the current flow between the second pair of contacts 110 is more evenly distributed across the cross-section of the sensing material 104 due to the greater distance between the contacts in the second pair 110. Therefore this resistance (R₂) is more dependent on the ambient temperature (Tₐ) compared with R₁. The resistances R₁ and R₂ may then, for example, be compared with calibration data that maps R₁ and R₂ against known substrate temperatures (Tₛ) and ambient temperatures (Tₐ) to give independent measures of both temperatures.

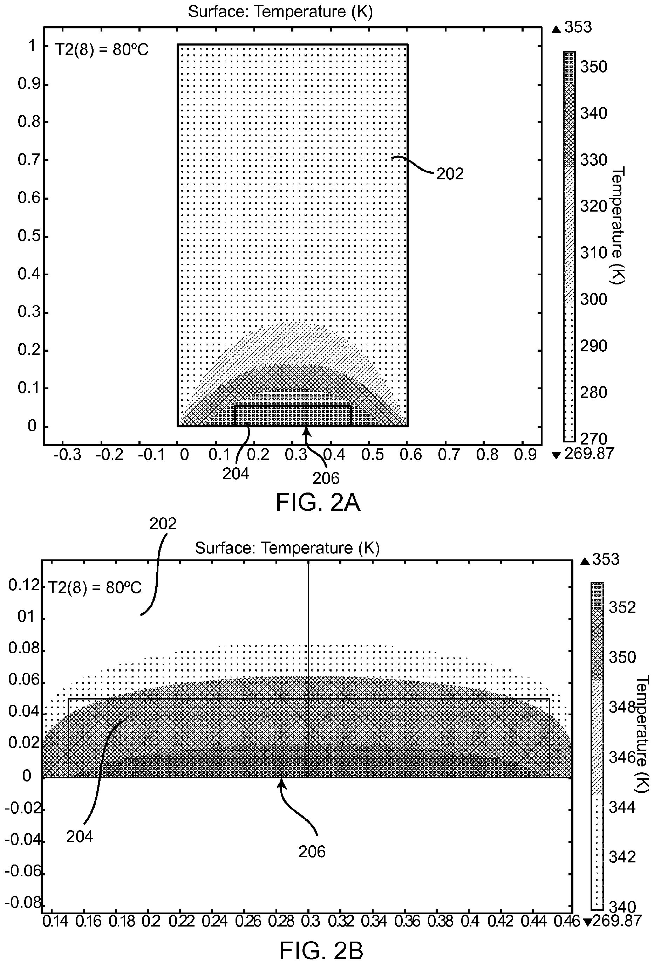

Figures 2a and 2b illustrate a finite-element computer model of a typical temperature distribution in a sensing material of an apparatus and the atmosphere around an apparatus. Figure 2b is a zoomed-in version of figure 2a. The atmosphere 202 and a rectangular sensing material 204 are shown. The x and y axes show positions along the sensing material faces and distances into the surrounding atmosphere 202. The boundaries of the air domain 202 in the model are set to allow convective heat transfer from the sensing material 204 and substrate with the surrounding ambient environment at a set ambient temperature (Tₐ). The sensing material 204 has a thermal conductivity (κ) set at κ = 0.1 W/(mK) and a temperature coefficient of resistivity (α) set at α = 3.8 x 10⁻³ K⁻¹. The bottom plane 206 of the sensing material 204 is modelled as if in contact with a substrate with a fixed substrate temperature (Tₛ).

The temperature is shown as a colour map, with the temperature value shown by the z-axis value (scale shown in Kelvin on the right of the figures). The sensing material surface 206 modelled to be in contact with a heated substrate is set at a temperature (denoted T2(8)) of 80 °C). The ambient temperature is set to 10 °C.

The temperature difference between the top and bottom surfaces of the sensing material 204 at the centre is approximately 4°C. The temperature decreases with increasing distance from the heated substrate interface 206. In these models, the temperature decreases more rapidly with distance away from the substrate at the edges of the sensing material 204 than in the centre, due to the finite size of the modelled substrate.

The temperature distribution within the sensing material 204 will be dependent on the temperature of the substrate and on the ambient temperature of the atmosphere surrounding the sensing material 204. The temperature distribution will also depend on the thermal conductivity and geometry of the sensing material 204.

Figures 3a and 3b illustrate models of typical current density in an apparatus according to the models shown in figures 2a-2b. The x and y axes show positions along the sensing material faces. The first and second pairs of contacts are located at the bottom plane of the sensing material region 312 (the sensing material/substrate interface). The sensing material surface 312 is set at a temperature (denoted T2(8)) of 80 °C. Figure 3a shows a second pair of contacts 306, 310 and figure 3b shows a first pair of contacts 306, 308. Each pair shares a common contact 306 in this example. In the model shown, the contact present in the second pair (but not the first) 210 is set at 1 V and the contacts in the first pair 206, 208 are set at 0 V in each case. A suitable potential difference should be set in the model in order to measure the resistance (or other electrical property) of the sensing material. Such a range may be, for example, from 1 mV to 10 V. Further, the excitation may be DC, as in the current model, or AC wherein the frequency may vary from 1 Hz to 10 MHz, for example.

The current density is shown as a vector field of arrows within the sensing material. Larger arrows represent higher current density values. The current density z-axis/colour map scale is shown on the right of figures 3a-3b. Figure 3a for the second, spaced apart, pair of contacts shows that the current flow is much more evenly distributed across the cross-section of the sensing material. The average current flow path 314 is shown through the bulk of the sensing material 304 at a distance of about 0.025 units from the sensing material/substrate boundary 312 for a sensing material 0.05 units thick. Figure 3b for the first, closely spaced, pair of contacts shows the current density to be much more concentrated near the interface with the substrate due to the close proximity of the contacts. The average current flow path 316 is shown close to the sensing material/substrate boundary 312 at a distance of less than 0.005 units from the sensing material/substrate boundary 312 for a sensing material 0.05 units thick.

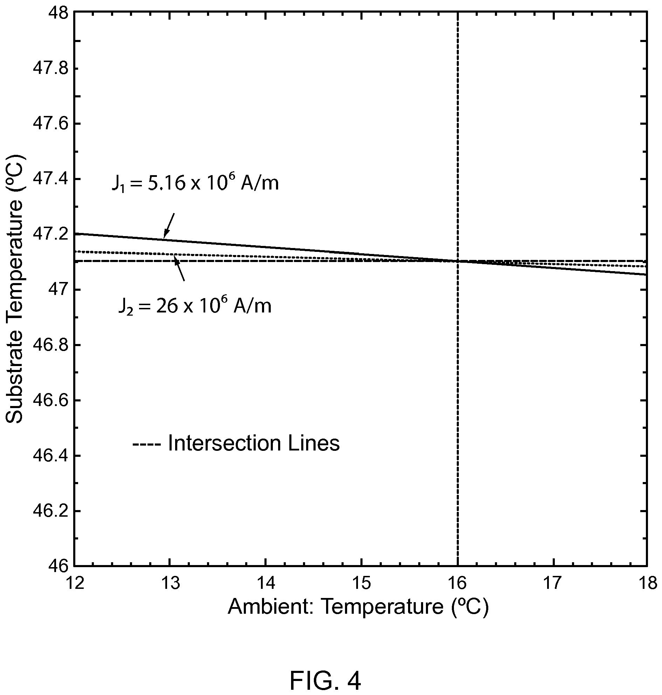

Figure 4 illustrates example calibration data which provides a relationship between pairs of electrical property measurements and pairs of atmosphere/substrate temperatures. This may be provided as a database, look-up table, or graphical plot, for example. The calibration method and variations described below are not exhaustive and other options for determining temperatures from calibrated measured electrical properties may be used.

A 3-D calibration map may be generated by setting a pair of known ambient and substrate temperatures, and determining an electrical property value (such as a current density value J or a resistance value R) at those temperature values. In this way, by systematically varying the known substrate and ambient temperatures, a 3-D map of electrical property values may be generated as a calibration plot. For example, maps of resistances R₁ and R₂ (or the equivalent current densities J₁ and J₂) between first and second pairs of contacts may be measured for a series of known ambient and substrate temperature values. Thus two calibration plots may be generated, one for R₁ (or J₁) in relation to the first pair of contacts and a second plot for R₂ (or J₂) in relation to the second pair of contacts.

Each calibration map may show lines of constant electrical property values for varying ambient and substrate temperatures (or such lines may be obtained from interpolating between discrete map values). Such lines may be considered to be isolines (that is, constant current density isolines or constant resistance isolines).

To use the calibration maps, measured electrical property values from the two pairs of sensors may be taken. To determine the ambient and substrate temperatures from the calibration maps, the isoline corresponding to the value of the electrical property taken from the first pair of contacts may be extracted from the temperature calibration map for the first pair of contacts, and the isoline corresponding to the value of the electrical property taken from the second pair of contacts may be extracted from the temperature calibration map for the second pair of contacts. Thus two isolines corresponding to the measured electrical properties are found. These may be plotted together in temperature space as in figure 4.

The example electrical property used in figure 4 is current density J. Figure 4 shows isolines of constant current densities J₁ and J₂ plotted on an ambient temperature/ substrate temperature grid (i.e. in temperature space). The equation of the line (line 1) in temperature space corresponds to the current density measured from the first pair of contacts as J₁ = 5.16 x 10⁶ A/m². The equation of the line (line 2) in temperature space corresponds to the current density measured from the second pair of contacts as J₂ = 26 x 10⁶ A/m².

Where these current density isolines cross provides a unique solution of ambient temperature (along the x-axis) and substrate temperature (along the y-axis) for the electrical properties measured using the first and second pairs of contacts. In this example, a first current density was measured of 26 x 10⁶ A/m² from the first pair of contacts, and a second current density was measured of 5.16 x 10⁶ A/m² from the second pair of contacts. Two current density isolines are thus indicated on the calibration plot, corresponding respectively to J₁ = 26 x 10⁶ A/m² and J₂ = 5.16 x 10⁶ A/m². The intersection of these two lines is shown. The intersection of these current density isolines gives the ambient and substrate temperatures (namely, in this example, an ambient temperature of 16 °C and a substrate temperature of 47.1 °C).

Figures 5a and 5b illustrate the effect of changing the geometry of the sensing material 502. Figure 5a shows a model of current density between two electrodes 504, 506 within a sensing material 502 with a 1:1 aspect ratio (i.e. a square sensing material 502). For this example it can be seen that the current density further away from the sensing material 502/substrate interface is not uniform, and is less evenly distributed across the cross-section of the material 502. The aspect ratio of the sensing material and the first and second contact pair separations may be calculated to give a uniform current density in the bulk of the material. The vertical dashed line 508 indicates where the line plot in figure 5b is taken from.

Figure 5b shows a series of line plots extracted from 3-D current density maps as in figure 5a for different substrate temperatures (from 10°C to 80°C in 10°C increments.) The left side of the plot in figure 5b (indicated as 0 arc length) corresponds to the side of the sensing material in contact with the atmosphere, and the right side of the plot (indicated as 0.3 arc length) corresponds to the side of the sensing material on which the contact pairs are mounted (the side which is in contact with the substrate in this example). Each plotted line indicates the current flowing from right to left in the sensing material as shown in figure 5a. A higher current flow is found closer to the contact (and substrate) side of the sensing material and a lower current flow is found as the distance away from the contacts is increased. In this example, the difference in current density between the substrate and atmosphere sides of the sensing material increases as the temperature difference between the sides decreases.

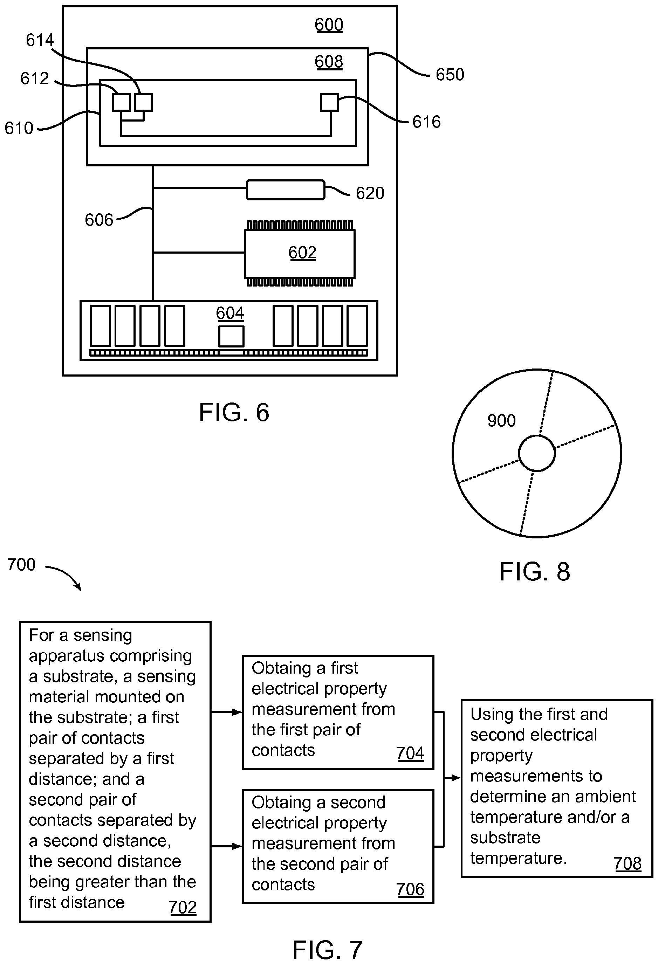

Figure 6 shows an example of an apparatus/device 600 comprising an apparatus 650 configured for temperature sensing as described herein. The apparatus/device 600 also comprises a processor 602 and a storage medium 604 which are electrically connected to one another by a data bus 606. The apparatus/device 600 may be one or more of, for example: an electronic device, a portable electronic device, a telecommunications device, a mobile phone, a smartphone, a tablet computer, a laptop computer, a smartwatch, smart eyewear, a personal digital assistant, a digital camera, a non-portable electronic device, a desktop computer, a monitor, a household appliance, a smart TV, a server, or a module/circuitry for one or more of the same.

In this example, the temperature sensing apparatus 650 comprises a substrate 608, a sensing material 610 located on the substrate 608, a first pair of contacts 612, 614 coupled to the sensing material 610 and separated by a first distance, and a second pair of contacts 612, 616 coupled to the sensing material 610 and separated by a second distance. The second distance is greater than the first distance. As described above, the apparatus 650 is configured to provide a first electrical property measurement between the first pair of contacts 612, 614 and to provide a second electrical property measurement between the second pair of contacts 612, 616. The first and second electrical property measurements are suitable for use in determining an ambient temperature and/or a substrate temperature.

The processor 602 is configured for general operation of the apparatus 600 by providing signalling to, and receiving signalling from, the other components to manage their operation. The processor 602 may be a microprocessor, such as an Application Specific Integrated Circuit (ASIC).

The storage medium 604 is configured to store computer code configured to perform, control or enable operation of the apparatus 600. The storage medium 604 may also be configured to store settings for the other components. The storage medium 604 may comprise read-only memory (ROM), for example for storage of computer code/computer readable instructions, and random-access memory (RAM), for example for executing stored computer code/computer readable instructions. The processor 602 may access the storage medium 604 to retrieve the component settings in order to manage the operation of the other components. The storage medium 604 may be a temporary storage medium such as a volatile random access memory. In other examples the storage medium 604 may be a permanent storage medium such as a hard disk drive, a flash memory, or a non-volatile random access memory.

The apparatus/device 600 in this example also comprises a controller 620. The controller 620 in this example is shown as a separate component connected via the data bus 606 to the temperature sensing apparatus 650 and the memory 604 and processor 602. In other examples the processor 602 may at least partially comprise the controller 620, or the controller may be distributed amongst other components of the apparatus 600, for example.

The controller 620 in this example is coupled to the first and second pairs of contacts 612, 614; 612, 616 via the data bus 606 and connections (not shown) on the substrate 608. The controller 620 may be configured to obtain first and second electrical property measurements from the first and second pairs of contacts. For example, the controller 620 may be configured to apply a voltage (or cause a voltage to be applied) across the first set of contacts to determine a first resistance value, then may apply a voltage (or cause a voltage to be applied) across the second set of contacts to determine a second resistance value. Of course other electrical properties may be measured/determined by the controller 620.

The controller 620 may be configured to use the first and second electrical property measurements to determine the ambient temperature. For example, the controller 620 may have access to stored predetermined calibration data with which to compare the first and second electrical property measurements and may perform analysis to determine the ambient and/or the substrate temperature. The controller 620 may perform the comparison with calibration data in some examples.

In some examples the controller 620 may be configured to compare the first and second electrical property measurements to determine the ambient temperature. For example, the controller 620 may identify a calibration curve corresponding to each measurement, and may compare the first and second measurements via comparison of the two calibration curves to determine an intersection of the calibration curves from which a temperature value (such as an ambient temperature) may be obtained. In some examples the controller 620 may be configured to compare the first and second electrical property measurements to determine the substrate temperature.

Figure 7 illustrates an example method 700 comprising the following steps for a sensing apparatus comprising a substrate, a sensing material mounted on the substrate; a first pair of contacts coupled to the sensing material and separated by a first distance; and a second pair of contacts coupled to the sensing material and separated by a second distance, the second distance being greater than the first distance 702: obtaining a first electrical property measurement from the first pair of contacts 704; obtaining a second electrical property measurement from the second pair of contacts 706; and using the first and second electrical property measurements to determine an ambient temperature and/or a substrate temperature 708.

Figure 8 illustrates schematically a computer/processor readable medium 800 providing an example computer program configured to carry out the following for any apparatus disclosed here: obtain a first electrical property measurement from the first pair of contacts; obtain a second electrical property measurement from the second pair of contacts; and use the first and second electrical property measurements to determine an ambient temperature and/or a substrate temperature. The computer program may be configured to carry out any method disclosed herein.

In this example, the computer/processor readable medium 800 is a disc such as a digital versatile disc (DVD) or a compact disc (CD). In other embodiments, the computer/ processor readable medium 800 may be any medium that has been programmed in such a way as to carry out an inventive function. The computer/processor readable medium 1100 may be a removable memory device such as a memory stick or memory card (SD, mini SD, micro SD or nano SD).

Other embodiments depicted in the figures have been provided with reference numerals that correspond to similar features of earlier described embodiments. For example, feature number 1 can also correspond to numbers 101, 201, 301 etc. These numbered features may appear in the figures but may not have been directly referred to within the description of these particular embodiments. These have still been provided in the figures to aid understanding of the further embodiments, particularly in relation to the features of similar earlier described embodiments.

It will be appreciated to the skilled reader that any mentioned apparatus/device and/or other features of particular mentioned apparatus/device may be provided by apparatus arranged such that they become configured to carry out the desired operations only when enabled, e.g. switched on, or the like. In such cases, they may not necessarily have the appropriate software loaded into the active memory in the non-enabled (e.g. switched off state) and only load the appropriate software in the enabled (e.g. on state). The apparatus may comprise hardware circuitry and/or firmware. The apparatus may comprise software loaded onto memory. Such software/computer programs may be recorded on the same memory/processor/functional units and/or on one or more memories/processors/functional units.

In some embodiments, a particular mentioned apparatus/device may be pre-programmed with the appropriate software to carry out desired operations, and wherein the appropriate software can be enabled for use by a user downloading a "key", for example, to unlock/enable the software and its associated functionality. Advantages associated with such embodiments can include a reduced requirement to download data when further functionality is required for a device, and this can be useful in examples where a device is perceived to have sufficient capacity to store such pre-programmed software for functionality that may not be enabled by a user.

It will be appreciated that any mentioned apparatus/circuitry/elements/processor may have other functions in addition to the mentioned functions, and that these functions may be performed by the same apparatus/circuitry/elements/processor. One or more disclosed aspects may encompass the electronic distribution of associated computer programs and computer programs (which may be source/transport encoded) recorded on an appropriate carrier (e.g. memory, signal).

It will be appreciated that any "computer" described herein can comprise a collection of one or more individual processors/processing elements that may or may not be located on the same circuit board, or the same region/position of a circuit board or even the same device. In some embodiments one or more of any mentioned processors may be distributed over a plurality of devices. The same or different processor/processing elements may perform one or more functions described herein.

It will be appreciated that the term "signalling" may refer to one or more signals transmitted as a series of transmitted and/or received signals. The series of signals may comprise one, two, three, four or even more individual signal components or distinct signals to make up said signalling. Some or all of these individual signals may be transmitted/received simultaneously, in sequence, and/or such that they temporally overlap one another.

With reference to any discussion of any mentioned computer and/or processor and memory (e.g. including ROM, CD-ROM etc), these may comprise a computer processor, Application Specific Integrated Circuit (ASIC), field-programmable gate array (FPGA), and/or other hardware components that have been programmed in such a way to carry out the inventive function.

## Claims

1. An apparatus (100, 600) comprising:
a substrate (102, 608);
a sensing material (104, 204, 502, 610) located on the substrate;
a first pair of contacts (106; 306, 308; 612, 614) coupled to the sensing material and separated by a first distance (108); and
a second pair of contacts (110; 306, 310; 612, 616) coupled to the sensing material and separated by a second distance (112), the second distance being greater than the first distance;
wherein the apparatus is configured to provide a first electrical property measurement between the first pair of contacts and to provide a second electrical property measurement between the second pair of contacts, the first and second electrical property measurements for use in determining an ambient temperature and/or a substrate temperature, **characterized in that** the sensing material is a single piece of a particular material.

2. The apparatus (100, 600) of claim 1, wherein the first and second pairs of contacts are located on a common side of the sensing material (104, 204, 502, 610).

3. The apparatus (100, 600) of claim 1 or claim 2, wherein the first and second pairs of contacts are located on the side of the sensing material (104, 204, 502, 610) located adjacent to the substrate (102, 608).

4. The apparatus (100, 600) of any preceding claim, wherein the sensing material (104, 204, 502, 610) comprises one of: a carbon foam; an aluminium foam, and a graphene foam.

5. The apparatus (100, 600) of any preceding claim, wherein the ratio of the separation of the first pair of contacts (106; 306, 308; 612, 614) to the second pair of contacts (110; 306, 310; 612, 616) is: 1:2; 1:4; 1:6; 1:8; 1:10; 1:11; 1:12; 1:13; 1:14; 1:15, 1:20, 1:30, 1:40 or 1:50.

6. The apparatus (100, 600) of any preceding claim, wherein the first pair of contacts (106; 306, 308; 612, 614) and the second pair of contacts (110; 306, 310; 612, 616) share a common contact (110, 306, 612).

7. The apparatus (100, 600) of any preceding claim, wherein the first and second electrical property measurements are measurements of: resistance, resistivity, current, current density, or voltage.

8. The apparatus (100, 600) of any preceding claim, further comprising a controller (620) coupled to the first and second pairs of contacts, and configured to:
obtain the first and second electrical property measurements; and
use the first and second electrical property measurements to determine the ambient temperature.

9. The apparatus (100, 600) of claim 8, wherein the controller (620) is configured to compare the obtained first and second electrical property measurements with predetermined calibration data for determination of the ambient temperature.

10. The apparatus (100, 600) of any of claims 8 to 9, wherein the controller (620) is configured to apply a voltage across the first pair of contacts (106; 306, 308; 612, 614) and/or the second pair of contacts (110; 306, 310; 612, 616) to respectively determine the first electrical property measurement and/or the second electrical property measurement.

11. The apparatus (100, 600) of any of claims 8 to 10, wherein the controller (620) is configured to compare the first and second electrical property measurements to determine the ambient temperature.

12. The apparatus (100, 600) of any of claims 8 to 11, wherein the controller (620) is configured to compare the first and second electrical property measurements to determine the substrate temperature.

13. The apparatus (100, 600) of any preceding claim, wherein the apparatus is comprised in one or more of: a portable electronic device, a mobile phone, a smartphone, a tablet computer, a laptop computer, a smartwatch, smart eyewear, a personal digital assistant, a digital camera, a non-portable electronic device, a desktop computer, a monitor, a household appliance, a smart TV, a server, or a module/circuitry for one or more of the same.

14. A method (700) comprising:
for a sensing apparatus comprising a substrate (102, 608), a sensing material (104, 204, 502, 610) mounted on the substrate; a first pair of contacts (106; 306, 308; 612, 614) coupled to the sensing material and separated by a first distance (108); and a second pair (110; 306, 310; 612, 616) of contacts coupled to the sensing material and separated by a second distance (112), the second distance being greater than the first distance (702);
obtaining a first electrical property measurement from the first pair of contacts (704);
obtaining a second electrical property measurement from the second pair of contacts (706); and
using the first and second electrical property measurements to determine an ambient temperature and/or a substrate temperature (708),
**characterized in that** the sensing material is a single piece of a particular material.

## Patentansprüche

1. Vorrichtung (100, 600), umfassend:
ein Substrat (102, 608);
ein Erfassungsmaterial (104, 204, 502, 610), das auf dem ersten Substrat angebracht ist;
ein erstes Paar Kontakte (106; 306, 308; 612, 614), die mit dem Erfassungsmaterial verbunden sind und durch einen ersten Abstand (108) getrennt sind; und
ein zweites Paar Kontakte (110; 306, 310; 612, 616), die mit dem Erfassungsmaterial verbunden sind und durch einen zweiten Abstand (112) getrennt sind, wobei der zweite Abstand größer als der erste Abstand ist;
wobei die Vorrichtung konfiguriert ist zum Bereitstellen einer ersten elektrischen Eigenschaftsmessung zwischen dem ersten Paar Kontakte und zum Bereitstellen einer zweiten elektrischen Eigenschaftsmessung zwischen dem zweiten Paar Kontakte, wobei die ersten und die zweiten elektrischen Eigenschaftsmessungen beim Ermitteln einer Umgebungstemperatur und/oder einer Substrattemperatur verwendet werden, **dadurch gekennzeichnet, dass** das Erfassungsmaterial ein einzelnes Teil eines bestimmten Materials ist.

2. Vorrichtung (100, 600) nach Anspruch 1, wobei das erste und das zweite Paar Kontakte auf einer gleichen Seite des Erfassungsmaterials (104, 204, 502, 610) angebracht sind.

3. Vorrichtung (100, 600) nach Anspruch 1 oder Anspruch 2, wobei das erste und das zweite Paar Kontakte auf der Seite des Erfassungsmaterials (104, 204, 502, 610) angebracht sind, die sich in der Nachbarschaft des Substrats (102, 608) befindet.

4. Vorrichtung (100, 600) nach einem der vorhergehenden Ansprüche, wobei das Erfassungsmaterial (104, 204, 502, 610) eines der Folgenden umfasst: einen Kohlenstoffschaum; einen Aluminiumschaum und einen Graphenschaum.

5. Vorrichtung (100, 600) nach einem der vorhergehenden Ansprüche, wobei das Verhältnis der Trennung des ersten Paars Kontakte (106; 306, 308; 612, 614) zu dem zweiten Paar Kontakte (110; 306, 310; 612, 616) beträgt: 1:2; 1:4; 1:6; 1:8; 1:10; 1:11; 1:12; 1:13; 1:14; 1:15, 1:20, 1:30, 1:40 oder 1:50.

6. Vorrichtung (100, 600) nach einem der vorhergehenden Ansprüche, wobei das erste Paar Kontakte (106; 306, 308; 612, 614) und das zweite Paar Kontakte (110; 306, 310; 612, 616) einen gleichen Kontakt (110, 306, 612) gemeinsam nutzen.

7. Vorrichtung (100, 600) nach einem der vorhergehenden Ansprüche, wobei die Messungen der ersten und der zweiten elektrischen Eigenschaft Messungen sind von: einem Widerstand, einem spezifischen Widerstand, einem Strom, einer Stromdichte oder einer Spannung.

8. Vorrichtung (100, 600) nach einem der vorhergehenden Ansprüche, die außerdem eine Steuereinheit (620) umfasst, die mit dem ersten und dem zweiten Paar Kontakte verbunden ist und konfiguriert ist zum:
Erhalten der ersten und der zweiten elektrischen Eigenschaftsmessungen; und
Verwenden der ersten und der zweiten elektrischen Eigenschaftsmessungen zum Ermitteln der Umgebungstemperatur.

9. Vorrichtung (100, 600) nach Anspruch 8, wobei die Steuereinheit (620) konfiguriert ist zum Vergleichen der erhaltenen ersten und zweiten elektrischen Eigenschaftsmessungen mit vorbestimmten Kalibrierungsdaten zum Ermitteln der Umgebungstemperatur.

10. Vorrichtung (100, 600) nach einem der Ansprüche 8 bis 9, wobei die Steuereinheit (620) konfiguriert ist zum Anlegen einer Spannung über das erste Paar Kontakte (106; 306, 308; 612, 614) und/oder über das zweite Paar Kontakte (110; 306, 310; 612, 616), um jeweils die erste elektrische Eigenschaftsmessung und/oder die zweite elektrische Eigenschaftsmessung zu ermitteln.

11. Vorrichtung (100, 600) nach einem der Ansprüche 8 bis 10, wobei die Steuereinheit (620) konfiguriert ist zum Vergleichen der ersten und der zweiten elektrischen Eigenschaftsmessungen, um die Umgebungstemperatur zu ermitteln.

12. Vorrichtung (100, 600) nach einem der Ansprüche 8 bis 11, wobei die Steuereinheit (620) konfiguriert ist zum Vergleichen der ersten und der zweiten elektrischen Eigenschaftsmessungen, um die Substrattemperatur zu ermitteln.

13. Vorrichtung (100, 600) nach einem der vorhergehenden Ansprüche, wobei die Vorrichtung in einer oder mehreren der folgenden Einrichtungen enthalten ist: einer tragbaren elektronischen Vorrichtung, einem Mobiltelefon, einem Smartphone, einem Tablet-Computer, einem Laptop-Computer, einer Smartwatch, einem Smartglass, einem persönlichen digitalen Assistenten, einer Digitalkamera, einer nichttragbaren elektronischen Vorrichtung, einem Desktop-Computer, einem Monitor, einem Haushaltsgerät, einem Smart-TV, einem Server oder einem Modul oder einer Schaltung für eine oder mehrere davon.

14. Verfahren (700), das für eine Erfassungsvorrichtung, die umfasst: ein Substrat (102, 608), ein Erfassungsmaterial (104, 204, 502, 610), das auf dem ersten Substrat angebracht ist; ein erstes Paar Kontakte (106; 306, 308; 612, 614), die mit dem Erfassungsmaterial verbunden sind und durch einen ersten Abstand (108) getrennt sind; und ein zweites Paar Kontakte (110; 306, 310; 612, 616), die mit dem Erfassungsmaterial verbunden sind und durch einen zweiten Abstand (112) getrennt sind; wobei der zweite Abstand größer als der erste Abstand ist (702), umfasst:
Erhalten einer ersten elektrischen Eigenschaftsmessung von dem ersten Paar Kontakte (704) und
Erhalten einer zweiten elektrischen Eigenschaftsmessung von dem zweiten Paar Kontakte (706); und
Verwenden der ersten und der zweiten elektrischen Eigenschaftsmessungen, um eine Umgebungstemperatur und/oder eine Substrattemperatur zu ermitteln (708), **dadurch gekennzeichnet, dass** das Erfassungsmaterial ein einzelnes Teil eines bestimmten Materials ist.

## Revendications

1. Appareil (100, 600) comprenant :
un substrat (102, 608) ;
un matériau de détection (104, 204, 502, 610) situé sur le substrat ;
une première paire de contacts (106 ; 306, 308 ; 612, 614) couplés au matériau de détection et séparés par une première distance (108) ; et
une deuxième paire de contacts (110 ; 306, 310 ; 612, 616) couplés au matériau de détection et séparés par une deuxième distance (112), la deuxième distance étant supérieure à la première distance ;
l'appareil étant configuré pour fournir une première mesure de propriété électrique entre les contacts de la première paire de contacts et pour fournir une deuxième mesure de propriété électrique entre les contacts de la deuxième paire de contacts, les première et deuxième mesures de propriété électrique étant destinées à être utilisées dans la détermination d'une température ambiante et/ou d'une température de substrat,
**caractérisé en ce que** le matériau de détection est un seul morceau d'un matériau particulier.

2. Appareil (100, 600) de la revendication 1, dans lequel les première et deuxième paires de contacts sont situées sur un côté commun du matériau de détection (104, 204, 502, 610).

3. Appareil (100, 600) de la revendication 1 ou la revendication 2, dans lequel les première et deuxième paires de contacts sont situées sur le côté du matériau de détection (104, 204, 502, 610) situé au voisinage du substrat (102, 608).

4. Appareil (100, 600) d'une quelconque revendication précédente, dans lequel le matériau de détection (104, 204, 502, 610) comprend un élément parmi : une mousse de carbone, une mousse d'aluminium, et une mousse de graphène.

5. Appareil (100, 600) d'une quelconque revendication précédente, dans lequel le rapport de séparation entre la première paire de contacts (106 ; 306, 308 ; 612, 614) et la deuxième paire de contacts (110 ; 306, 310 ; 612, 616) est de : 1:2, 1:4, 1:6, 1:8, 1:10, 1:11, 1:12, 1:13, 1:14, 1:15, 1:20, 1:30, 1:40 ou 1:50.

6. Appareil (100, 600) d'une quelconque revendication précédente, dans lequel la première paire de contacts (106 ; 306, 308 ; 612, 614) et la deuxième paire de contacts (110 ; 306, 310 ; 612, 616) partagent un contact commun (110, 306, 612).

7. Appareil (100, 600) d'une quelconque revendication précédente, dans lequel les première et deuxième mesures de propriété électrique sont des mesures de : résistance, résistivité, courant, densité de courant, ou tension.

8. Appareil (100, 600) d'une quelconque revendication précédente, comprenant en outre un contrôleur (620) couplé aux première et deuxième paires de contacts, et configuré pour :
obtenir les première et deuxième mesures de propriété électrique ; et
utiliser les première et deuxième mesures de propriété électrique pour déterminer la température ambiante.

9. Appareil (100, 600) de la revendication 8, dans lequel le contrôleur (620) est configuré pour comparer les première et deuxième mesures de propriété électrique obtenues avec des données d'étalonnage prédéterminées pour la détermination de la température ambiante.

10. Appareil (100, 600) de l'une quelconque des revendications 8 à 9, dans lequel le contrôleur (620) est configuré pour appliquer une tension aux bornes de la première paire de contacts (106 ; 306, 308 ; 612, 614) et/ou de la deuxième paire de contacts (110 ; 306, 310 ; 612, 616) pour déterminer respectivement la première mesure de propriété électrique et/ou la deuxième mesure de propriété électrique.

11. Appareil (100, 600) de l'une quelconque des revendications 8 à 10, dans lequel le contrôleur (620) est configuré pour comparer les première et deuxième mesures de propriété électrique pour déterminer la température ambiante.

12. Appareil (100, 600) de l'une quelconque des revendications 8 à 11, dans lequel le contrôleur (620) est configuré pour comparer les première et deuxième mesures de propriété électrique pour déterminer la température de substrat.

13. Appareil (100, 600) d'une quelconque revendication précédente, l'appareil étant compris dans un ou plusieurs des éléments suivants : un dispositif électronique portable, un téléphone mobile, un téléphone intelligent, une tablette tactile, un ordinateur portable, une montre connectée, des lunettes connectées, un assistant numérique personnel, une caméra numérique, un dispositif électronique non portable, un ordinateur de bureau, un moniteur, un appareil ménager, un téléviseur connecté, un serveur, ou un module/circuit pour un ou plusieurs de ces éléments.

14. Procédé (700) comprenant :
pour un appareil de détection comprenant un substrat (102, 608) ; un matériau de détection (104, 204, 502, 610) monté sur le substrat ; une première paire de contacts (106 ; 306, 308 ; 612, 614) couplés au matériau de détection et séparés par une première distance (108) ; et une deuxième paire de contacts (110 ; 306, 310 ; 612, 616) couplés au matériau de détection et séparés par une deuxième distance (112), la deuxième distance étant supérieure à la première distance (702):
l'obtention d'une première mesure de propriété électrique à partir de la première paire de contacts (704) ;
l'obtention d'une deuxième mesure de propriété électrique à partir de la deuxième paire de contacts (706) ; et
l'utilisation des première et deuxième mesures de propriété électrique pour déterminer une température ambiante et/ou une température de substrat (708),
**caractérisé en ce que** le matériau de détection est un seul morceau d'un matériau particulier.
